(19) **Europäisches Patentamt**

**European Patent Office**

**Office européen des brevets**

(11) **EP 1 479 724 B1**

(12) **EUROPEAN PATENT SPECIFICATION**

(45) Date of publication and mention
of the grant of the patent:
**11.10.2006 Bulletin 2006/41**

(51) Int Cl.:
**C08L 23/22** (2006.01)    **C08L 23/28** (2006.01)
**B60C 1/00** (2006.01)

(21) Application number: **04009359.3**

(22) Date of filing: **20.04.2004**

(54) **Pneumatic tire**

Fahrzeugluftreifen

Bandage pneumatique

(84) Designated Contracting States:
**DE FR GB**

(30) Priority: **13.05.2003 JP 2003134980**

(43) Date of publication of application:
**24.11.2004 Bulletin 2004/48**

(73) Proprietor: **SUMITOMO RUBBER INDUSTRIES
LIMITED
Kobe-shi,
Hyogo-ken (JP)**

(72) Inventors:
 • **Yagi, Noriko
   Chuo-ku
   Kobe-shi
   Hyogo-ken (JP)**
 • **Muraoka, Kiyoshige
   Chuo-ku
   Kobe-shi
   Hyogo-ken (JP)**
 • **Minagawa, Yasuhisa
   Chuo-ku
   Kobe-shi
   Hyogo-ken (JP)**
 • **Nishioka, Kazuyuki
   Chuo-ku
   Kobe-shi
   Hyogo-ken (JP)**

(74) Representative: **Manitz, Finsterwald & Partner
GbR
Postfach 31 02 20
80102 München (DE)**

(56) References cited:
**EP-A- 1 195 402      US-A- 5 386 864
US-A- 5 475 051**

Remarks:
The file contains technical information submitted after
the application was filed and not included in this
specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a pneumatic tire, wherein a rubber composition, in which air permeability is significantly decreased by mixing butyl rubber, halogenated butyl rubber or rubber obtained by halogenating a copolymer of isomonoolefin having 4 to 7 carbon atoms and p-alkylstyrene and epoxidized natural rubber in a specific ratio, is used for the inner liner.

A pneumatic tire can support load and exhibit various properties such as riding comfort and fuel efficiency by supplying air into the tire. Therefore, maintaining the air pressure within a tire is extremely important. In order to prevent air leakage and maintain the air pressure in the tire, an inner liner comprising rubber having low air permeability, such as butyl rubber and halogenated butyl rubber, is formed on the inner face of a pneumatic tire.

However, when the content of butyl rubber is increased, strength of unvulcanized rubber decreases and problems such as rubber breakage and sheet holes tend to occur. On the other hand, the inner liner must not only be decreased in air permeability, but must also be lightweight in order to improve fuel efficiency of an automobile and so thin gauge is also required. Various efforts have been made to meet these demands and properties. For example, JP-A-5-508435 discloses a method of using a rubber obtained by halogenating a copolymer of isomonoolefin having 4 to 7 carbon atoms and p-alkylstyrene, as the rubber composition for the inner liner. However, air permeability is not sufficiently decreased by this method and there is the problem that the tire becomes heavy. Also, JP-A-8-259741, JP-A-11-199713, JP-A-2000-63572, JP-A-2000-159936 and JP-A-2000-160024 suggest using a rubber composition obtained by mixing or dynamically crosslinking an elastomer and polyamide resin, polyester resin, polynitrile resin, cellulose resin, fluororesin or imide resin for the tire inner liner. However, such rubber compositions have problems, such as extreme difficulty in following expansion and contraction of other rubber material when processing by molding a tire or vulcanizing and development of cracks when running.

US Patent 5,475,051 discloses vulcanizable elastomeric compositions comprising a halobutyl rubber matrix, an epoxidized natural rubber and a reinforcing amount of a siliceous inorganic filler material, such as silica, which may be used as an impermeable sealing layer for tire carcasses.

As described above, various suggestions have been made regarding using a composition having low air permeability for the inner liner, but are yet to be realized. Therefore, the object of the present invention is to provide a rubber composition having favorable adhesion, in which air permeability is significantly decreased, and a pneumatic tire, which can be made lightweight without losing pressure-maintaining properties.

As a result of intensive studies to solve the above problems, the present inventors have found that air permeability can be significantly decreased without decreasing other properties, by containing carbon black, sodium-bentonite, epoxidized natural rubber and at least one rubber selected from the group consisting of butyl rubber, halogenated butyl rubber and rubber obtained by halogenating a copolymer of isomonoolefin having 4 to 7 carbon atoms and p-alkylstyrene.

That is, the present invention relates to a pneumatic tire having an inner liner comprising a rubber composition containing 20 to 100 parts by weight of carbon black and 3 to 20 parts by weight of sodium-bentonite as phyllosilicate, based on 100 parts of a rubber component containing 65 to 94 % by weight of at least one rubber selected from the group consisting of butyl rubber, halogenated butyl rubber and rubber obtained by halogenating a copolymer of isomonoolefin having 4 to 7 carbon atoms and p-alkylstyrene; and 6 to 35 % by weight of epoxidized natural rubber having an epoxidization ratio of 5 to 85 % by mol.

The present invention is described in detail below.

Examples of the butyl rubber used in the present invention are butyl rubber (IIR), halogenated butyl rubber (X-IIR) such as chlorinated butyl rubber and brominated butyl rubber and rubber obtained by halogenating a copolymer of isomonoolefin having 4 to 7 carbon atoms and p-alkylstyrene. These rubbers may be used alone or in a combination of two or more kinds.

Of these, from the viewpoint of adhesion with the lower layer, halogenated butyl rubber and rubber obtained by halogenating a copolymer of isomonoolefin having 4 to 7 carbon atoms and p-alkylstyrene are preferable and particularly, rubber obtained by halogenating a copolymer of isomonoolefin having 4 to 7 carbon atoms and p-alkylstyrene is preferable. In the case of using halogenated butyl rubber or rubber obtained by halogenating a copolymer of isomonoolefin having 4 to 7 carbon atoms and p-alkylstyrene, the halogen content is preferably 0.1 to 5 % by weight. When the halogen content is less than 0.1 % by weight, the vulcanization degree is too low and strength of the rubber tends to decrease. When the halogen content is more than 5 % by weight, the vulcanization degree becomes high and the rubber tends to become hard.

The rubber composition of the present invention contains epoxidized natural rubber (ENR). As the epoxidized natural rubber used in the present invention, commercially available epoxidized natural rubber can be used or natural rubber can be epoxidized and then used. The method for epoxidizing natural rubber is not particularly limited but epoxidization can be conducted using methods such as the chlorohydrin method, the direct oxidization method, the hydrogen peroxide method, the alkyl hydroperoxide method and the peracid method. An example is the method of reacting natural rubber with organic peracid such as peracetic acid or performic acid.

The epoxidization degree of the epoxidized natural rubber used in the present invention is preferably 5 to 85 % by mol, preferably 5 to 75 % by mol, more preferably 5 to 65 % by mol. When the epoxidization degree is less than 5 % by mol, the effect of modifying is small and when the epoxidization degree is more than 85 % by mol, the polymer gelates. Herein, the epoxidization degree refers to the ratio of double bonds of the main chain of natural rubber, which are cyclized by oxygen, to all double bonds before epoxidization. The epoxidization degree is calculated by the method of finding, from NMR measurement data, area intensity A of methine protons derived from natural rubber near 5.10 ppm and area intensity B of protons derived from epoxy groups near 2.7 ppm and then finding the epoxidization degree from the following equation.

$$\text{Epoxidization degree (\%)} = B/(A + B) \times 100$$

The compounding ratio of epoxidized natural rubber in the rubber component is 6 to 35 % by weight, preferably 10 to 30 % by weight, more preferably 15 to 30 % by weight. When the compounding ratio of epoxidized natural rubber is less than 6 % by weight, air permeability is not sufficiently decreased and the effects of adding epoxidized natural rubber cannot be obtained. Furthermore, sufficient adhesion with other materials cannot be obtained, thus being unfavorable. When the compounding ratio is more than 35 % by weight, not only does water vapor permeability become high, but also heat aging resistance decreases, thus being unfavorable. The compounding ratio of butyl rubber is 65 to 94 % by weight, preferably 70 to 90 % by weight, more preferably 70 to 85 % by weight. When the compounding ratio of butyl rubber is less than 65 % by weight, air permeability is not decreased and water vapor permeability becomes high. When the compounding ratio of butyl rubber is more than 94 % by weight, adhesion with the compounded rubber becomes poor.

According to the above method, in the case that the main polymer in the system is butyl rubber, butyl rubber becomes the matrix phase and the effects of ENR, which is the island phase, are exhibited. That is, because ENR is the island phase and butyl rubber is the matrix phase in the rubber component, the rubber composition of the present invention exhibits the excellent effect of improving adhesion of the ENR phase and adhesion of neighboring compounded rubber, while maintaining low air permeability and low water permeability of butyl rubber.

The rubber composition of the present invention can contain normal natural rubber, isoprene rubber, styrene-butadiene rubber, butadiene rubber and styrene-isoprene butadiene rubber as another rubber component.

The rubber composition of the present invention contains an inorganic filler, namely carbon black. The kind of carbon black is not particularly limited and examples are HAF, ISAF, SAF, GPF and FEF.

The filler is compounded in an amount of 20 to 100 parts by weight, preferably 30 to 90 parts by weight, more preferably 40 to 80 parts by weight based on 100 parts by weight of the rubber component. When the amount of the filler is less than 20 parts by weight, reinforcing properties become low and when the amount is more than 100 parts by weight, processability tends to become poor.

Besides the filler, the rubber composition of the present invention can also contain silica, aluminum hydroxide, magnesium carbonate, magnesium hydroxide, aluminum oxide, magnesium oxide, clay, talc and mica.

The phyllosilicate, namely sodium-bentonite, used in the present invention refers to phyllosilicate having a layered structure, in which unit crystal layers are piled on each other, and is not particularly limited as long as the average particle size is at most 5 $\mu$m and the average aspect ratio is 50 to 5000. Herein, average particle size refers to the average value of the major diameter of the phyllosilicate and the average aspect ratio refers to the average value of the ratio of the thickness to the major diameter of the phyllosilicate. When the average particle size of the phyllosilicate is more than 5 $\mu$m, processability when preparing a tire tends to decrease. Furthermore, the average particle size of the phyllosilicate is preferably within the range of 0.1 to 5 $\mu$m. When the average aspect ratio of the phyllosilicate is less than 50, the effect of decreasing air permeability is insufficient. Phyllosilicate having an average aspect ratio of more than 5000 is technically difficult to obtain and economically expensive. From the viewpoint of decreasing air permeability, the average aspect ratio of the phyllosilicate is more preferably within the range of 200 to 3000.

According to the present invention the inner liner of the pneumatic tire comprises an phyllosilicate sodiumbentonite, which is from the viewpoints of industrial cost and excellent dispersability advantageous.

In the rubber composition of the present invention, the phyllosilicate is preferably finely dispersed in the rubber component. When the phyllosilicate is finely dispersed in the rubber component, air permeability is decreased further.

The fine dispersion of phyllosilicate refers to layered filler of the phyllosilicate being exfoliated. Specifically, fine dispersion of phyllosilicate can be confirmed by direct with a transmission electron microscope (TEM) or by X-ray diffraction of the rubber composition containing phyllosilicate. In the case of X-ray diffraction, fine dispersion of phyllosilicate refers to when the peak of intensity when 2θ is 6 to 8° has disappeared.

The phyllosilicate can be finely dispersed, by exchanging the exchangeable cations between the layers of the phyllosilicate according to the matrix. Specifically, an example is the method of ion-exchanging the exchangeable cations with sodium ions or organic cations such as quaternary ammonium salt (organic treatment).

In the rubber composition of the present invention, the method for finely dispersing phyllosilicate can be the method of finely dispersing by mechanically kneading with a normal BR-type banbury mixer, a roll or a twin-screw extruder, the method of finely dispersing in advance in compounded oil and the method of adding a solvent to rubber to create a rubber solution and then finely dispersing in advance in the solution.

The phyllosilicate is compounded in an amount of 3 to 20 parts by weight, preferably 3 to 10 parts by weight based on 100 parts by weight of the rubber component. When the amount of the phyllosilicate is less than 3 parts by weight, the effect of decreasing air permeability tends to be small and when the amount is more than 20 parts by weight, processability tends to become poor.

Besides the rubber component, filler and phyllosilicate, the rubber composition of the present invention can contain other compounding agents usually used in a rubber composition for a tire, such as a plasticizer including chemical oil, a tackifier, a crosslinking agent including sulfur and zinc oxide, a crosslinking aid and a vulcanization accelerator.

The rubber composition of the present invention is obtained by kneading the rubber component, filler, phyllosilicate and other compounding agents when necessary, using the usual processing apparatus such as a roll, a banbury mixer and a kneader.

The rubber composition of the present invention obtained in this way has low air permeability.

The pneumatic tire of the present invention can be prepared by the usual method using the rubber composition for the inner liner. The thickness of the inner liner is preferably 0.5 to 2 mm. When the thickness of the inner liner is less than 0.5 mm, pressure maintaining properties tend to become poor and when the thickness is more than 2 mm, the tire becomes heavy and rolling resistance tends to become poor.

Hereinafter, the present invention is explained in detail by means of Examples, but the present invention is not limited thereto.

According to the present invention, by mixing carbon black, sodium bentonite, epoxidized natural rubber and butyl rubber (butyl rubber, halogenated butyl rubber or rubber obtained by halogenating a copolymer of isomonoolefin having 4 to 7 carbon atoms and p-alkylstyrene) in a specific ratio, a rubber composition can be obtained, in which air permeability can be significantly decreased and adhesion to expansion and contraction of the tire is excellent when molding the tire or running.

Consequently, by using the rubber composition for the inner liner of a pneumatic tire, the air pressure of the tire can be maintained even when the inner liner is made thin and a lightweight tire can be obtained.

Also, the rubber composition is excellent in adhesion to carcass rubber and therefore in the pneumatic tire of the present invention having an inner liner comprising the rubber composition, the inner liner can be made thin, while maintaining durability and without losing air pressure maintaining properties. That is, the present invention is effective for obtaining a lightweight tire.

## Claims

1. A pneumatic tire having an inner liner comprising a rubber composition containing

    20 to 100 parts by weight of carbon black and
    3 to 20 parts by weight of sodium-bentonite,
    based on 100 parts of a rubber component containing
    65 to 94 % by weight of at least one rubber selected from the group consisting of butyl rubber, halogenated butyl rubber and rubber obtained by halogenating a copolymer of isomonoolefin having 4 to 7 carbon atoms and p-alkylstyrene; and
    6 to 35 % by weight of epoxidized natural rubber having an epoxidization ratio of 5 to 85 % by mol.

## Patentansprüche

1. Luftreifen mit einem Innerliner enthaltend eine Gummizusammensetzung enthaltend

    20 bis 100 Gewichtsteile Ruß und
    3 bis 20 Gewichtsteile Natriumbentonit,
    basierend auf 100 Teilen einer Kautschukkomponente enthaltend 65 bis 94 Gew.-% wenigstens eines Kautschuks ausgewählt aus der Gruppe bestehend aus Butylkautschuk, halogeniertem Butylkautschuk und durch Halogenieren eines Copolymers von Isomonoolefin mit 4 bis 7 Kohlenstoffatomen und p-Alkylstyrol erhaltenen Kautschuks und
    6 bis 35 Gew.-% eines epoxidierten Naturkautschuks mit einem Epoxidierungsverhältnis von 5 bis 85 Mol-%.

## Revendications

1. Bandage pneumatique ayant une doublure interne comprenant une composition de caoutchouc contenant
   de 20 à 100 parties en poids de noir de carbone et
   de 3 à 20 parties en poids de bentonite de sodium,
   sur la base de 100 parties d'un composant de caoutchouc contenant
   de 65 à 94 % en poids d'au moins un caoutchouc choisi dans le groupe composé du caoutchouc de butyle, du caoutchouc de butyle halogéné et du caoutchouc obtenu en halogénant un copolymère d'isomonooléfine ayant de 4 à 7 atomes de carbone et un p-alkylstyrène ; et
   de 6 à 35 % en poids de caoutchouc naturel époxydé ayant un rapport d'époxydation de 5 à 85 % en mole.